# EUROPEAN PATENT APPLICATION

(11) **EP 4 641 770 A1**
(43) Date of publication of application: **29.10.2025**
(21) Application number: 24172663.7
(22) Date of filing: 26.04.2024
(51) Int. Cl.: H01M 10/658, H01M 50/209, H01M 50/30, H01M 50/503, H01M 50/507, H01M 50/514, H01M 50/55

(54) **BATTERY SYSTEM, ELECTRIC VEHICLE, CELL CONTACTING UNIT AND METHOD FOR ASSEMBLING THE BATTERY SYSTEM**

(71) Applicant: Samsung SDI Co., Ltd., Yongin-si, Gyeonggi-do 17084 (KR)
(72) Inventor: Haring, Fritz, 8600 Bruck / Mur (AT); Urbanitsch, Michael, 8074 Raaba-Grambsch (AT); Wroblewska-Sokolinska, Karina, 8010 Graz (AT)
(74) Representative: Gulde & Partner

(57) **Abstract**

The present disclosure refers to a battery system (100). The battery system (100) includes a battery pack (10), a cell contacting unit, CCU, carrier (18) and a plurality of busbars (20). The battery pack (10) includes a plurality of battery cells (12) each having a pair of electrode terminals (14) and a venting valve (16) disposed on a terminal side of the battery cells (12). The terminal side of the battery cells (12) faces a first side of the battery pack (10) along a z-direction. The CCU carrier (18) is disposed on the terminal side of each of the battery cells (12). The plurality of busbars (20) is disposed on the electrode terminals (14) of the battery cells (12) and is in mechanical contact with the CCU carrier (18). The busbars (20) each includes an elastic member (22) configured to exert a clamping force on the CCU carrier (18).

## Description

### Field of the Disclosure

The present disclosure relates to a battery system and an electric vehicle including the battery system. Further, the present disclosure relates to a cell contacting unit for a battery pack and a method for assembling the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a required amount of power and in order to realize a high-power rechargeable battery.

Battery modules can be constructed in either a block design or a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let the venting gas stream discharged by the battery cell(s) expand into the battery housing and escape through a housing venting valve to the outside (e.g., to the environment of the battery housing). However, the hot venting gas stream discharged by the battery cells(s) may flow into tolerance related gaps below the cell contacting unit carrier which covers and contacts the battery cells of a battery pack and stay there. The hot venting gas stream then heats up the components inside the battery housing such as the other battery cells of the battery packs. For example, particles from the venting gas stream may deposit onto the battery cells which may lead to thermal propagation and may incite thermal runaway in adjacent battery cells, i.e. leading to an infection of additional (adjacent) battery cells of the battery pack.

It is thus an object of the present invention provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided including a battery pack including a plurality of battery cells each having a pair of electrode terminals and a venting valve disposed on a terminal side of the battery cells, wherein the terminal side of each of the battery cells faces a first side of the battery pack along a z-direction; a cell contacting unit, CCU, carrier disposed on the terminal side of the battery cells; and a plurality of busbars disposed on the electrode terminals of the battery cells and being in mechanical contact with the CCU carrier, wherein the busbars each includes an elastic member configured to exert a clamping force on the CCU carrier.

According to an aspect of the present disclosure, the battery system further includes a heat resistant cell protection cover arranged between the CCU carrier and the battery cells.

According to an aspect of the present disclosure, the elastic members of the busbars are further configured to exert the clamping force on the CCU carrier so that the CCU carrier is pressed onto the terminal side of each of the battery cells along the z-direction via the heat resistant cell protection cover.

According to an aspect of the present disclosure, the CCU carrier includes one or a plurality of CCU elastic members configured to exert a CCU clamping force on the heat resistant cell protection cover so that the heat resistant cell protection cover is pressed onto the terminal side of each of the battery cells in the z-direction.

According to an aspect of the present disclosure, the heat resistant cell protection cover includes or consists of mica and/or an aerogel.

According to an aspect of the present disclosure, the elastic members of the busbars include a spring protrusion and/or a section preloaded with respect to the z-direction towards the battery cells, when the busbars are disposed on the electrode terminals.

According to an aspect of the present disclosure, the CCU carrier and/or heat resistant cell protection cover include a recess and/or a slotted hole arranged between adjacent battery cells.

According to an aspect of the present disclosure, the venting valve of each of the battery cells is arranged between the electrode terminals of the respective battery cell and the CCU carrier and/or heat resistant cell protection cover are sized to be arranged in an area of the terminal sides of the battery cells between the electrode terminals of the battery cells.

According to an aspect of the present disclosure, the elastic members are configured to exert an amount of clamping force on the CCU carrier which is sufficient to fixate the CCU carrier to the battery cells.

According to an aspect of the present disclosure, the battery system further includes a heat resistant touch protection housing mechanically coupled to the CCU carrier, wherein the heat resistant touch protection covers the busbars.

According to an aspect of the present disclosure, the heat resistant touch protection housing further partially covers a side section of the battery cells along the z-direction to provide heat resistance between adjacent battery cells.

According to an aspect of the present disclosure, the CCU carrier includes a supporting section for supporting an end of the heat resistant touch protection housing extending between the CCU carrier and the heat resistant touch protection housing along the z-direction.

According to another aspect, the present disclosure refers to an electric vehicle including the battery system according to any one of the preceding claims.

Yet another aspect of the present disclosure refers to a cell contacting unit, CCU, for a battery pack, the battery pack including a plurality of battery cells each having a pair of electrode terminals and a venting valve disposed on a terminal side of the battery cells, wherein the terminal side of each of the battery cells face a first side of the battery pack along a z-direction, wherein the CCU includes a CCU carrier disposed on the terminal side of the battery cells and a plurality of busbars disposed on the CCU carrier, wherein the busbars each includes an elastic member configured to exert a clamping force on the CCU carrier.

Yet another aspect of the present disclosure refers to a method for assembling a battery system as defined in any of the claims 1 to 12, wherein the method includes the steps of a) providing a battery pack including a plurality of battery cells each having a pair of electrode terminals and a venting valve disposed on a terminal side of the battery cells, wherein the terminal side of each of the battery cells face a first side of the battery pack along a z-direction, b) providing a CCU as defined in claim 14 and c) disposing the UCC carrier of the CCU on the terminal side of each of the battery cells of the battery pack and the busbars of the CCU on the electrode terminals of the battery cells.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic cross-sectional view of a battery system according to an embodiment of the present disclosure.
- FIG. 2: illustrates a top view of the battery system shown in FIG. 1.
- FIG. 3: illustrates a schematic cross-sectional view of the battery system shown in FIG. 1 along a stacking direction.
- FIG. 4: illustrates a schematic flow chart of a method for assembling the battery system shown in FIG. 1 according to an embodiment of the present disclosure.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a battery pack. The battery pack includes a plurality of battery cells. The battery cells of the plurality of battery cells each have a pair of electrode terminals and a venting valve disposed on a terminal side of the battery cells. The terminal side of each of the battery cells faces a first side of the battery pack along a z-direction. Each venting valve may be adapted to allow for a venting gas stream to be discharged from the respective battery cell during a thermal runaway of this battery cell. In other words, the venting valves may open upon a predefined pressure being exceeded. The venting valves are provided at or in venting exits, e.g. a venting hole, of the battery cells. The battery cells may be accommodated inside a battery housing of the battery pack and/or the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic cells.

The battery system further includes a cell contacting unit, CCU, carrier disposed on the terminal side of each of the battery cells. The shape of the CCU carrier may be rectangular. The CCU carrier, however, is not limited to the rectangular shape. The CCU may also be of any other kind of shape fitting to the battery pack, for example, square-shaped or ellipsoidal-shaped. The CCU carrier may further include measuring lines for transmitting at least one physical property of the battery cells. The physical property may be, for example, voltage, current or temperature of the battery cells. The CCU carrier may be attached to the terminal side of each of the battery cells, e.g. by a fixation means such as a screw, bolt or an adhesive.

The battery system further includes a plurality of busbars. The busbars of the plurality of busbars are disposed on the electrode terminals of the battery cells. For example, the busbars may be attached to the electrode terminals, e.g. by welding. The busbars are further in mechanical contact with the CCU carrier. The mechanical contact exists between the busbars and a surface of the CCU carrier facing away from the first side of the battery pack. For example, at least a section of a first half of the busbars is disposed on, e.g. welded to, the electrode terminals of the battery cells and at least another section of a second half, i.e. opposite to the first half, of the busbars is in mechanical contact with the CCU carrier.

The busbars each includes an elastic member configured to exert a clamping force on the CCU carrier, e.g. such that the CCU carrier is pressed onto the terminal side of each of the battery cells along the z-direction. In other words, the busbars are mechanically coupled to the CCU carrier by the exerted clamping force. Accordingly, the elastic members are configured to exert an amount of clamping force on the CCU carrier which is sufficient to individually close tolerance related gaps with respect to the z-direction between the battery cells of the plurality of battery cells and the CCU carrier. Due to the exerted clamping force of the elastic members, a gap, e.g. the tolerance related gaps, between the battery cell top covers and the CCU carrier along the z-direction can be prevented. In other words, the sealing between the battery cell top covers and the CCU carrier can be improved. The elastic members may be integrally formed with the busbars.

In case one of the battery cells is affected by a thermal runaway, a hot venting gas stream is discharged from the affected battery cell via its venting exit. As gaps, e.g. the tolerance related gaps, between the battery cell top covers and the CCU carrier along the z-direction are prevented, the hot venting gas stream cannot flow or stay below the CCU carrier such that the risk of an infection of additional battery cells, e.g. adjacent battery cells of the battery pack, is reduced.

According to an embodiment, the battery system further includes a heat resistant cell protection cover arranged between the CCU carrier and the battery cells. The heat resistant cell protection covers provides additional heat protection, e.g. during a thermal runaway. The hot venting gas stream may heat up the components inside the battery housing such as the other battery cells. For example, particles from the venting gas stream may deposit onto the battery cells which may lead to thermal propagation and may incite thermal runaway in adjacent battery cells. To protect the battery cells from this, the heat resistant cell protection cover may be provided covering the battery cells at their terminal side, i.e. the heat resistant cell protection cover may be arranged such that it covers the plurality of battery cells at their terminal sides. For example, the heat resistant cell protection cover may cover the top side of the battery cells. The heat resistant cell protection cover may cover all of the battery cells of the plurality of battery cells, i.e. the heat resistant cell protection cover extends about the terminal sides of all of the battery cells of the plurality of battery cells. The heat resistant cell protection cover may be attached to the terminal side of each of the battery cells, e.g. by a fixation means such as a screw, bolt or an adhesive.

According to another embodiment, the elastic members of the busbars are further configured to exert the clamping force on the CCU carrier so that the CCU carrier is pressed onto the terminal side of each of the battery cells along the z-direction via the heat resistant cell protection cover. Because the elastic members of the busbars also press the heat resistant cell protection cover onto the terminal side of the battery cells, gaps between the heat resistant cell protection cover and the top cover of the battery cells can also be prevented and the sealing of the heat resistant cell protection cover will be improved. Hot venting gas stream cannot flow or stay below the heat resistant cell protection cover such that the risk of an infection of additional battery cells, e.g. adjacent battery cells of the battery pack, is further reduced.

According to another embodiment, the CCU carrier includes one or a plurality of CCU elastic members configured to exert a CCU clamping force on the heat resistant cell protection cover so that the heat resistant cell protection cover is pressed onto the terminal side of each of the battery cells in the z-direction. Due to the CCU elastic members, a separate fixation (means) or attachment of heat resistant cell protection cover is not required and assembling of the battery system may be facilitated. The CCU elastic member(s) may include a spring protrusion and/or a section preloaded with respect to the z-direction towards the battery cells, when the CCU carrier is disposed on the terminal side of each of the battery cells. The CCU elastic members may be integrally formed with the CCU carrier. For example, The spring protrusion and/or the section preloaded with respect to the z-direction towards the battery cells may be integrally formed with the CCU carrier.

According to another embodiment, the heat resistant cell protection cover includes or consists of mica and/or an aerogel. Mica, i.e. mica silicate minerals, and aerogel, i.e. synthetic porous ultralight materials derived from a gel, are heat-resistant materials.

According to another embodiment, the elastic members of the busbars include a spring protrusion and/or a section preloaded with respect to the z-direction towards the battery cells, when the busbars are disposed on the electrode terminals. The spring protrusion and/or the section preloaded with respect to the z-direction towards the battery cells may be integrally formed with the busbars.

According to another embodiment, the CCU carrier and/or heat resistant cell protection cover include a recess and/or a slotted hole arranged between adjacent battery cells. Recesses, i.e. a material weakening, or slotted holes, i.e. elongated slits, between adjacent battery cells facilitate individual movements of the CCU carrier (with respect to the individual battery cells) caused by the individual elastic members of the busbars for each of the battery cells so that differences between the battery cells along the z-direction can be better compensated, i.e. tolerance related gaps between the battery cell top covers and the CCU or the heat resistant cell protection cover can be better prevented. In other words, the recesses and/or slotted holes provide more flexibility of the CCU carrier and/or the heat resistant cell protection cover. The recesses and/or slotted holes extend in a direction orthogonal to the z-direction and the stacking direction of the plurality of battery cells.

According to another embodiment, the venting valve of each of the battery cells is arranged between the electrode terminals of the respective battery cell. The CCU carrier and/or the heat resistant cell protection cover are sized to be arranged in an area of the terminal sides of the battery cells between the electrode terminals of the battery cells. In other words, the CCU carrier and/or the heat resistant cell protection cover fit into the area(s) between the electrode terminals of the battery cells and does not extend over the electrode terminals.

According to another embodiment, the elastic members are configured to exert an amount of clamping force on the CCU carrier which is sufficient to fixate the CCU carrier to the battery cells. In other words, the amount of applied clamping force is higher than a threshold indicating the threshold value between fix and loose of the CCU carrier. Accordingly, no other fixation of the CCU carrier, e.g. screwing the CCU carrier to the battery pack/system housing, is required. That is, the CCU carrier is only held in place by the clamping force applied from the elastic members of the busbars. In other words, without the elastic members of the busbars, the CCU would be disposed loosely on the battery cells.

According to another embodiment, the battery system further includes a heat resistant touch protection housing mechanically coupled to the CCU carrier. The heat resistant touch protection covers the busbars, e.g. at least form touches in the z-direction. In other words, the heat resistant touch protection covers the busbars when viewed from the z-direction. The heat resistant touch protection may be fixated to the CCU carrier via a clip, i.e. clipped to the CCU carrier.

According to another embodiment, the heat resistant touch protection housing further partially covers a side section of the battery cells along the z-direction to provide heat resistance between adjacent battery cells.

According to another embodiment, the CCU carrier includes a supporting section for supporting an end of the heat resistant touch protection housing extending between the CCU carrier and the heat resistant touch protection housing along the z-direction.

The invention also pertains to an electric vehicle including a battery system according to the disclosure, for example as a traction battery.

The invention further pertains to a cell contacting unit, CCU, for a battery pack. The battery pack includes a plurality of battery cells each having a pair of electrode terminals and a venting valve disposed on a terminal side of the battery cells. The terminal side of each of the battery cells face a first side of the battery pack along a z-direction. The features and advantages described in view of the above-mentioned battery pack may be analogously applied to the battery pack of the CCU.

The CCU includes a CCU carrier disposed on the terminal side of the battery cells and a plurality of busbars disposed on the CCU carrier. The busbars each includes an elastic member configured to exert a clamping force on the CCU carrier, e.g. such that the CCU carrier is pressed onto the terminal side of each of the plurality of battery cells of the battery pack along the z-direction, when the CCU carrier is disposed on the battery pack. In other words, the busbars are held by the CCU carrier such that the CCU carrier including the measuring cables and busbars can be positioned together on the battery pack, i.e. the battery cell stack, before the busbars are welded to the cell poles. Thus, the assembling of the battery system may be facilitated. It is apparent that the busbars need corresponding freedom of movement (play) in z-direction such that they can press the CCU carrier onto each of the battery cells.

Further, the invention pertains to a method for assembling a battery system, namely the above-mentioned battery system.

According to one step of the method, a battery pack including a plurality of battery cells each having a pair of electrode terminals and a venting valve disposed on a terminal side of the battery cells is provided. The terminal side of each of the battery cells face a first side of the battery pack along a z-direction.

According to another step of the method, a CCU, namely the above-mentioned CCU, is provided.

According to another step, the UCC carrier of the CCU is disposed on the terminal side of each of the battery cells of the battery pack and the busbars are disposed of the CCU on the electrode terminals of the battery cells.

### Specific Embodiments

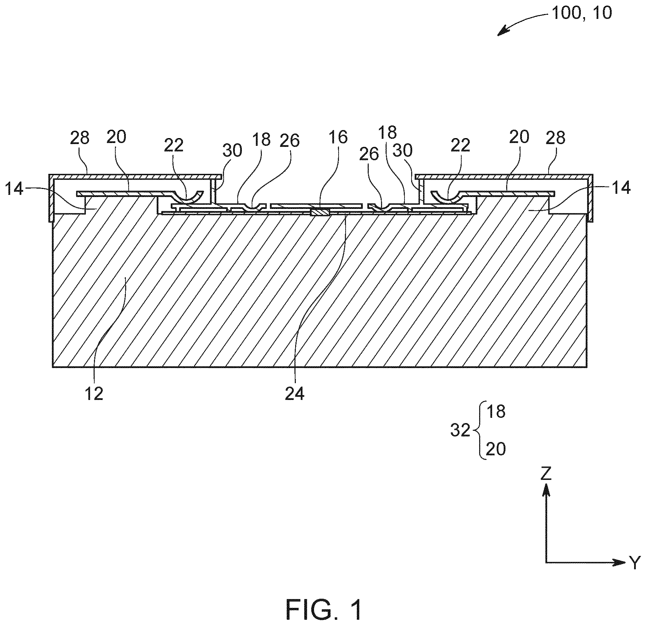

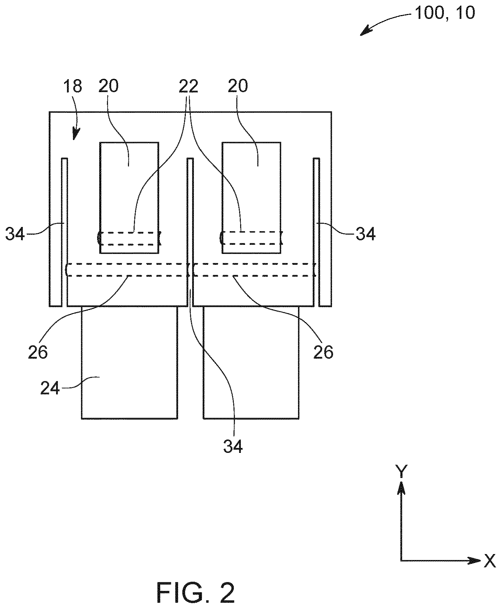

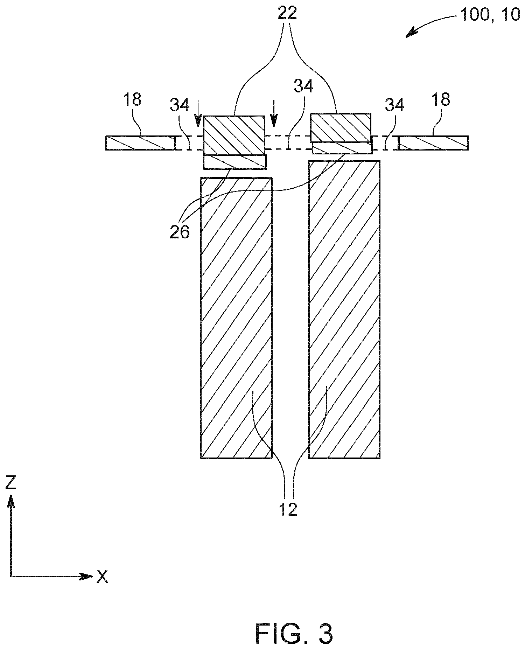

FIG. 1 illustrates a schematic cross-sectional view of a battery system 100 according to an embodiment along the longitudinal direction of a battery cell 12. FIGs. 2 and 3 respectively illustrate a corresponding top view and a corresponding schematic cross section along a stacking direction of the battery system 100 of FIG. 1.

The battery system 100 includes a battery pack 10 including a plurality of battery cells 12. For brevity reasons, FIGs. 2 and 3 merely depict an example of the battery pack 10 with two battery cells 12. However, this is merely exemplary and it is apparent that the battery pack 10 may include more than two battery cells 12. For example, the battery pack 10 may include 3, 4, 5, 6 or any arbitrary number of battery cells 12. The battery cells 12 are prismatic cells stacked along a stacking direction x to form a battery cell stack (see FIGs. 2 and 3).

Each of the battery cells 12 has a pair of electrode terminals 14 and a venting valve 16 disposed therebetween on a terminal side of the battery cells 12. The terminal side of each of the battery cells 12 faces a first side of the battery pack 10 along a z-direction. In FIGs. 1 and 3, the z-direction corresponds to the vertical direction of the image plane, i.e. from up to down or vice versa. In the other words, the z-direction may mean a height direction of the battery cells 12.

The battery system 100 further includes a cell contacting unit, CCU, carrier 18 disposed on the terminal side of each of the battery cells 12 and a plurality of busbars 20. Some of the busbars 20 are disposed on the electrode terminals 14 of the battery cells 12. According to this embodiment, the busbars 20 are each attached to the corresponding electrode terminals 14 of the battery cells 12, for example by welding. That is, a first section of the busbars 20 is disposed welded to the electrode terminals 14 of the battery cells 12. The first section of the busbars 20 may be more than half of a length of the busbar 20. As shown in FIG. 1, the busbars 20 are further in mechanical contact with the CCU carrier 18. The mechanical contact exists between the busbars 20 and a surface of the CCU carrier 18 facing away from the first side of the battery pack 10. A second section of the of the busbars 20 is in mechanical contact with the CCU carrier 18. The second section of the busbars is opposite to the first section of the busbars

The busbars 20 each include an elastic member 22 configured to exert a clamping force on the CCU carrier 18 such that the CCU carrier 18 is pressed onto the terminal side of each of the battery cells 12 along the z-direction. The busbars 20, namely the second halves thereof, are mechanically coupled to the CCU carrier 18 by the exerted clamping force. The elastic members 22 are configured to exert an amount of clamping force on the CCU carrier 18 which is sufficient to individually close tolerance related gaps with respect to the z-direction between the battery cells 12 and the CCU carrier 18. As exemplarily shown in FIG. 3, the left battery cell 12 has a smaller height in the z-direction, while the battery cell 12 depicted on the right side is higher in the z-direction so that usually a tolerance related gap would exist between the top of the left battery cell 12 and the CCU carrier 18. However, due to the exerted clamping force of the elastic members 22, the existence of such a gap can be prevented. In other words, the sealing between the battery cells 12 and the CCU carrier 18 can be improved and an infection of additional battery cells 12, for example the adjacent battery cell 12 on the right side of FIG. 3, is reduced. Due to the tolerance related gap of the left battery cells 12, the elastic member 22 of the left battery cell 12 is less contracted than the elastic member 22 of the right battery cell 12. That is, the battery system 100 includes a tolerance compensation along the z-direction.

The elastic members 22 of the busbars 20 include a spring protrusion. For example, the elastic members 22 are shaped as a (round) groove extending along a x-direction (see FIGs. 1 and 2). The x-direction may mean the stacking direction x. Additionally or alternatively, the elastic members 22 may be formed as a section of the busbars 20 which is preloaded towards the battery cells 12 with respect to the z-direction, when the busbars 20 are disposed on the electrode terminals 14.

As further shown in FIG. 1, the battery system 100 includes a heat resistant cell protection cover 24 arranged between the CCU carrier 18 and the battery cells 12. The heat resistant cell protection cover 24 is arranged so as to cover the battery cells 12 at their terminal sides (refer to FIG. 2). That is, the heat resistant cell protection cover 24 covers the top side of the battery cells 12. The heat resistant cell protection cover 24 may extend about the terminal sides of the battery cells 12. Since the heat resistant cell protection cover 24 is arranged between the CCU carrier 18 and the battery cells 12, the exerted clamping force of the elastic members 22 of the busbars 20 on the CCU carrier 18 is also exerted onto the heat resistant cell protection cover 24. For that reason, the existence of gaps between the CCU carrier 18 and heat resistant cell protection cover 24 can be furthermore prevented.

In order to further reduce the existence of gaps between the CCU carrier 18 and the heat resistant cell protection cover 24, the CCU carrier 18 includes CCU elastic members 26. The CCU elastic members 26 work similar as the elastic members 22 of the busbars 20. The CCU elastic members 26 are configured to exert a CCU clamping force on the heat resistant cell protection cover 24 so that the heat resistant cell protection cover 24 is pressed onto the terminal side of the battery cells 12 along the z-direction. Analogously, the CCU elastic members 26 include a spring protrusion, e.g. a (round) groove extending in parallel to the grooves of the elastic members 22, i.e. along the stacking direction x. Additionally or alternatively, the CCU elastic members 26 may be formed as a section preloaded towards the battery cells12 with respect to the z-direction, when the CCU carrier 18 is disposed on the battery cells 12.

For example, the CCU carrier 18 and the heat resistant cell protection cover 24 may be loosely disposed onto the battery cells 12 so as to be fixated by the clamping force exerted from the elastic members 22 and the CCU elastic members 26, only. In other words, the CCU carrier 18 and the heat resistant cell protection cover 24 may be clamped between the busbars 20 welded to the electrode terminals 14 and the top covers of the battery cells 12. Thus, no separate fixation means for the CCU carrier 18 and the heat resistant cell protection cover 24 is necessary in this case.

As shown in FIG. 2, the CCU carrier 18 and the heat resistant cell protection cover 24 include slotted holes 34, i.e. elongated slits, arranged between the adjacent battery cells 12, i.e. above the gaps between the battery cells 12 along the stacking direction x. In the present example, there are shown three slotted holes 34. The slotted holes 34 extend along a direction orthogonal to the z-direction and the stacking direction x. That is, the slotted holes 34 extend along a y-direction which is orthogonal to the stacking direction x and the z-direction. The slotted holes 34 provide more flexibility of the CCU carrier 18 and the heat resistant cell protection cover 24 such that a bending of the CCU carrier 18 is improved on an individual battery cell basis. Accordingly, the existence of tolerance related gaps between the battery cells 12 and the CCU carrier 18 and the heat resistant cell protection cover 24 may more efficiently prevented.

The battery system 100 further includes a heat resistant touch protection housing 28 mechanically coupled to the CCU carrier 18. The heat resistant touch protection housing 28 covers the busbars 20 in the z-direction. Furthermore, the heat resistant touch protection housing 28 partially covers a side section of the battery cells 12 along the z-direction to provide heat resistance between adjacent battery cells 12. The heat resistant touch protection housing 28 has a L-shaped cross section as shown in FIG. 1. However, the battery system 100 is not limited thereto and the heat resistant touch protection housing 28 may also be omitted.

The CCU carrier 18 includes a supporting section 30 for supporting an end of the heat resistant touch protection housing 28 extending between the CCU carrier 18 and the heat resistant touch protection housing 28 along the z-direction. However, the battery system 100 is not limited thereto and the supporting section 30 may also be omitted.

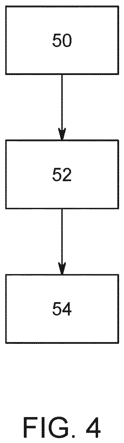

FIG. 4 illustrates a schematic flow chart of a method for assembling the battery system 100 of FIG. 1 according to an embodiment.

According to a first step 50 the above-mentioned battery pack 10 is provided, i.e. a battery pack 10 including a plurality of battery cells 12 each having a pair of electrode terminals 14 and a venting valve 16 disposed on a terminal side of the battery cells 12, wherein the terminal side of each of the battery cells 12 faces a first side of the battery pack 10 along a z-direction.

According to a second step 52 of the method, a CCU 32 is provided. The CCU 32 includes a CCU carrier 18, i.e. the above-mentioned CCU carrier 18 and a plurality of busbars 20, i.e. the above-mentioned busbars 20, disposed on the CCU carrier 18, wherein the busbars 20 each includes an elastic member 22 configured to exert a clamping force on the CCU carrier 18 such that the CCU carrier 18 is pressed onto the terminal side of each of the plurality of battery cells 12 of the battery pack 10 along the z-direction, when the CCU carrier 18 is disposed on the battery pack 10.

According to a third step 54 of the method, the UCC carrier 18 of the CCU 32 is disposed on the terminal side of each of the battery cells 12 of the battery pack 10 and the busbars 20 of the CCU 32 are disposed on the electrode terminals 14 of the battery cells 12.

### Reference signs

- 10: battery pack
- 12: battery cells
- 14: electrode terminals
- 16: venting valve
- 18: cell contacting unit carrier
- 20: busbars
- 22: elastic member
- 24: heat resistant cell protection cover
- 26: CCU elastic member
- 28: heat resistant touch protection
- 30: supporting section
- 32: cell contacting unit
- 34: slotted holes
- 50: first method step
- 52: second method step
- 54: third method step
- 100: battery system

## Claims

1. A battery system (100), comprising:
a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
a cell contacting unit, CCU, carrier (18) disposed on the terminal side of the battery cells (12); and
a plurality of busbars (20) disposed on the electrode terminals (14) of the battery cells (12) and being in mechanical contact with the CCU carrier (18), wherein the busbars (20) each comprises an elastic member (22) configured to exert a clamping force on the CCU carrier (18).

2. The battery system (100) according to claim 1 further comprising a heat resistant cell protection cover (24) arranged between the CCU carrier (18) and the battery cells (12).

3. The battery system (100) according to claim 2, wherein the elastic members (22) of the busbars (20) are further configured to exert the clamping force on the CCU carrier (18) so that the CCU carrier (18) is pressed onto the terminal side of each of the battery cells (12) along the z-direction via the heat resistant cell protection cover (24).

4. The battery system (100) according to claims 2 or 3, wherein the CCU carrier (18) comprises one or a plurality of CCU elastic members (26) configured to exert a CCU clamping force on the heat resistant cell protection cover (24) so that the heat resistant cell protection cover (24) is pressed onto the terminal side of each of the battery cells (12) in the z-direction.

5. The battery system (100) according to any one of claims 2 to 4, wherein the heat resistant cell protection cover (24) comprises or consists of mica and/or an aerogel.

6. The battery system (100) according to any one of the preceding claims, wherein the elastic members (22) of the busbars (20) comprise a spring protrusion and/or a section preloaded with respect to the z-direction towards the battery cells (12), when the busbars (20) are disposed on the electrode terminals (14).

7. The battery system (100) according to any one of the preceding claims, wherein the CCU carrier (18) and/or heat resistant cell protection cover (24) comprise a recess and/or a slotted hole (34) arranged between adjacent battery cells (12).

8. The battery system (100) according to any one of the preceding claims, wherein the venting valve (16) of each of the battery cells (12) is arranged between the electrode terminals (16) of the respective battery cell (12) and the CCU carrier (18) and/or heat resistant cell protection cover (24) are sized to be arranged in an area of the terminal sides of the battery cells (12) between the electrode terminals (16) of the battery cells (12).

9. The battery system (100) according to any one of the preceding claims, wherein the elastic members (22) are configured to exert an amount of clamping force on the CCU carrier (18) which is sufficient to fixate the CCU carrier (18) to the battery cells (12).

10. The battery system (100) according to any one of the preceding claims further comprising a heat resistant touch protection housing (28) mechanically coupled to the CCU carrier (18), wherein the heat resistant touch protection (28) covers the busbars (20).

11. The battery system (100) according to claim 10, wherein the heat resistant touch protection housing (28) further partially covers a side section of the battery cells (12) along the z-direction to provide heat resistance between adjacent battery cells (12).

12. The battery system (100) according to claim 10 or 11, wherein the CCU carrier (18) comprises a supporting section (30) for supporting an end of the heat resistant touch protection housing (28) extending between the CCU carrier (18) and the heat resistant touch protection housing (28) along the z-direction.

13. An electric vehicle comprising the battery system (100) according to any one of the preceding claims.

14. A cell contacting unit, CCU, (32) for a battery pack (10), the battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction, wherein the CCU (32) comprises:
a CCU carrier (18) disposed on the terminal side of the battery cells (12); and
a plurality of busbars (20) disposed on the CCU carrier (18), wherein the busbars (20) each comprises an elastic member (22) configured to exert a clamping force on the CCU carrier (18).

15. A method for assembling a battery system (100) as defined in any of the claims 1 to 12, wherein the method comprises the steps of:
a) providing a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction
b) providing a CCU (32) as defined in claim 14;
c) disposing the UCC carrier (18) of the CCU (32) on the terminal side of each of the battery cells (12) of the battery pack (10) and the busbars (20) of the CCU (32) on the electrode terminals (14) of the battery cells (12).

## Amended claims

### Amended claims in accordance with Rule 137(2) EPC.

1. A battery system (100), comprising:
a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
a cell contacting unit (CCU) carrier (18) disposed on the terminal side of the battery cells (12) and including measuring lines for transmitting at least one physical property of the battery cells (12); and
a plurality of busbars (20) disposed on the electrode terminals (14) of the battery cells (12) and being in mechanical contact with the CCU carrier (18), wherein the busbars (20) each comprises an elastic member (22) configured to exert a clamping force on the CCU carrier (18).

2. The battery system (100) according to claim 1 further comprising a heat resistant cell protection cover (24) arranged between the CCU carrier (18) and the battery cells (12).

3. The battery system (100) according to claim 2, wherein the elastic members (22) of the busbars (20) are further configured to exert the clamping force on the CCU carrier (18) so that the CCU carrier (18) is pressed onto the terminal side of each of the battery cells (12) along the z-direction via the heat resistant cell protection cover (24).

4. The battery system (100) according to claims 2 or 3, wherein the CCU carrier (18) comprises one or a plurality of CCU elastic members (26) configured to exert a CCU clamping force on the heat resistant cell protection cover (24) so that the heat resistant cell protection cover (24) is pressed onto the terminal side of each of the battery cells (12) in the z-direction.

5. The battery system (100) according to any one of claims 2 to 4, wherein the heat resistant cell protection cover (24) comprises or consists of mica and/or an aerogel.

6. The battery system (100) according to any one of the preceding claims, wherein the elastic members (22) of the busbars (20) comprise a spring protrusion and/or a section preloaded with respect to the z-direction towards the battery cells (12), when the busbars (20) are disposed on the electrode terminals (14).

7. The battery system (100) according to any one of the preceding claims, wherein the CCU carrier (18) and/or a/the heat resistant cell protection cover (24) comprise a recess and/or a slotted hole (34) arranged between adjacent battery cells (12).

8. The battery system (100) according to any one of the preceding claims, wherein the venting valve (16) of each of the battery cells (12) is arranged between the electrode terminals (16) of the respective battery cell (12) and the CCU carrier (18) and/or a/the heat resistant cell protection cover (24) are sized to be arranged in an area of the terminal sides of the battery cells (12) between the electrode terminals (16) of the battery cells (12).

9. The battery system (100) according to any one of the preceding claims, wherein the elastic members (22) are configured to exert an amount of clamping force on the CCU carrier (18) which is sufficient to fixate the CCU carrier (18) to the battery cells (12).

10. The battery system (100) according to any one of the preceding claims further comprising a heat resistant touch protection housing (28) mechanically coupled to the CCU carrier (18), wherein the heat resistant touch protection (28) covers the busbars (20).

11. The battery system (100) according to claim 10, wherein the heat resistant touch protection housing (28) further partially covers a side section of the battery cells (12) along the z-direction to provide heat resistance between adjacent battery cells (12).

12. The battery system (100) according to claim 10 or 11, wherein the CCU carrier (18) comprises a supporting section (30) for supporting an end of the heat resistant touch protection housing (28) extending between the CCU carrier (18) and the heat resistant touch protection housing (28) along the z-direction.

13. An electric vehicle comprising the battery system (100) according to any one of the preceding claims.

14. A method for assembling a battery system (100) as defined in any of the claims 1 to 12, wherein the method comprises the steps of:
a) providing a battery pack (10) comprising a plurality of battery cells (12) each having a pair of electrode terminals (14) and a venting valve (16) disposed on a terminal side of the battery cells (12), wherein the terminal side of each of the battery cells (12) faces a first side of the battery pack (10) along a z-direction;
b) providing a CCU (32) including a CCU carrier (18) including measuring lines for transmitting at least one physical property of the battery cells (12) and a plurality of busbars (20) disposed on the CCU carrier (18), wherein the busbars (20) each comprises an elastic member (22) configured to exert a clamping force on the CCU carrier (18);
c) disposing the CCU carrier (18) of the CCU (32) on the terminal side of each of the battery cells (12) of the battery pack (10) and the busbars (20) of the CCU (32) on the electrode terminals (14) of the battery cells (12).
